# EUROPÄISCHE PATENTSCHRIFT

(11) **EP 2 425 885 B1**
(45) Veröffentlichungstag und Bekanntmachung des Hinweises auf die Patenterteilung: **13.03.2013**
(21) Anmeldenummer: 11176653.1
(22) Anmeldetag: 05.08.2011
(51) Int. Cl.: B01D 39/20

(54) **Keramischer Filter sowie Verfahren zur Erstellung eines keramischen Filters**
Ceramic filter and method for producing a ceramic filter
Filtre céramique et procédé d'établissement d'un filtre céramique

(30) Priorität: 27.08.2010 DE 102010035637
(43) Veröffentlichungstag der Anmeldung: 07.03.2012
(73) Patentinhaber: Hochschule Koblenz, 56075 Koblenz (DE)
(72) Erfinder: Sahin, Cengiz, 56235 Ransbach Baumbach (DE); Kriegesmann, Jochen, 56203 Höhr-Grenzhausen (DE)
(74) Vertreter: Becker, Thomas

(56) Entgegenhaltungen:
- WO-A1-98/30315
- WO-A1-2004/050214
- WO-A1-2009/124555

## Beschreibung

Die Erfindung betrifft einen keramischen Filter sowie ein Verfahren zur Erstellung eines keramischen Filters.

Filter werden verwendet, um Feststoffe aus einem Fluidstrom, also einem Gas- oder Flüssigkeitsstrom, abzutrennen.

Als Filter sind insbesondere auch Körper aus keramischen Werkstoffen bekannt, sogenannte keramische Filter. Um ihre filternde Wirkung zu entfalten, weisen keramische Filter Poren einer solchen Porengröße auf, dass ein Gas- oder Flüssigkeitsstrom durch die offenen Poren des keramischen Filters hindurchströmen kann, in dem Gas- oder Flüssigkeitsstrom befindliche Feststoffe dabei jedoch durch den Filter zurückgehalten werden.

Um auch Feststoffe einer sehr geringen Größe, beispielsweise Partikel im Nanometerbereich, durch einen keramischen Filter abscheiden zu können, ist es notwendig, dass der keramische Filter Poren einer nur sehr geringen Porengröße aufweist, insbesondere regelmäßig auch mit einer Porengröße unter 10 µm, also beispielsweise auch 1 µm oder darunter. Keramische Filter mit einer solch geringen Porengröße stellen jedoch einen erheblichen Strömungswiderstand für einen durch den Filter strömenden Gas- oder Flüssigkeitsstrom dar, soweit der Filter eine für dessen mechanische Stabilität notwendige Mindestdicke aufweist. Insbesondere kann es beim Strömen des Gas- oder Flüssigkeitsstromes durch einen Filter mit einer solch geringen Porengröße und mit der für dessen mechanische Stabilität notwendigen Mindestdicke zu einem erheblichen Druckverlust und damit zu einem Leistungsabfall des Filters kommen. Im Extremfall ist eine Durchströmung des Filters überhaupt nicht mehr möglich. Im Ergebnis führt dies dazu, dass Poren in einem keramischen Filter, der eine für dessen mechanische Stabilität notwendige Mindestdicke aufweist, eine Mindestgröße aufweise müssen, um von einem Gas- oder Flüssigkeitsstrom durchströmbar zu sein. Diese Mindestgröße liegt regelmäßig im Bereich von etwa 10 µm. Auf Grund dieser notwendigen Mindestgröße der Poren ist es regelmäßig nicht möglich, sehr kleine Feststoffe, insbesondere im Nanometerbereich, durch keramische Filter aus einem Fluidstrom abzuscheiden.

Auf Grund ihrer hohen mechanischen, chemischen und thermischen Belastbarkeit haben sich keramische Filter aus nichtoxidkeramischen Werkstoffen bewährt. Dies gilt insbesondere für keramische Filter auf Basis von nichtoxidkeramischem Werkstoff in Form von Borcarbid (B₄C) oder von Siliciumcarbid (SiC); hinsichtlich SiC gilt dies insbesondere, soweit hieraus keramische Filter in Form von rekristallisiertem Siliciumcarbid (RSiC) erstellt sind.

Für keramische Filter aus einem nichtoxidkeramischen Werkstoff gelten die vorbeschriebenen Probleme hinsichtlich einer notwendigen Mindestporengröße entsprechend. Zur Lösung dieses Problems wurde in der Vergangenheit mehrfach vorgeschlagen, keramische Filter mit einer gradierten Gefügestruktur vorzusehen. Keramische Filter mit einer solch gradierten Gefügestruktur weisen wenigstens zwei Bereiche unterschiedlicher Porengröße auf. Dabei ist regelmäßig ein erster Bereich vorgesehen, der Poren einer ersten Porengröße aufweist, und ein zweiter Bereich, der Poren einer zweiten Porengröße aufweist. Die erste Porengröße ist dabei größer als die zweite Porengröße, wobei der erste Bereich zur Filterung von gröberen Feststoffpartikeln und der zweite Bereich zur Filterung feinerer Feststoffpartikel, insbesondere beispielsweise auch im Nanometerbereich, dient. Dies schafft die Möglichkeit, den zweiten Bereich relativ dünn auszubilden - insbesondere auch, da dieser dünne Bereiche zur Erreichung seiner mechanisch notwendigen Stabilität von dem weiteren Bereich mit größeren Poren "gestützt" wird - , so dass er für das hindurchströmende Fluid einen nur geringen Strömungswiderstand darstellt.

Als äußerst problematisch bei der Konfektionierung solch keramischer Filter mit einer gradierten Gefügestruktur hat sich jedoch die Verbindung der Bereiche unterschiedlicher Porengröße erwiesen. Dies liegt insbesondere daran, dass die verschiedenen Bereiche zur Ausbildung einer unterschiedlichen Porengröße aus einem nichtoxidkeramischen Werkstoff einer unterschiedlichen Körnung, also Körnern einer unterschiedlichen Korngröße, hergestellt werden müssen. Dabei gilt, dass Bereiche, die auf Basis einer Körnung mit einer größeren Korngröße erstellt wurden, eine größere Porengröße aufweisen als Bereiche, die auf Basis einer Körnung mit einer geringeren Korngröße erstellt wurden.

Die Sintertemperatur einer Körnung hängt jedoch von deren Korngröße ab. Dabei gilt grundsätzlich, dass die Sintertemperatur einer Körnung mit einer abnehmenden Korngröße sinkt und mit einer zunehmenden Korngröße steigt. Entsprechend ist zur Sinterung der Bereiche mit einer größeren Porengröße eine höhere Sintertemperatur notwendig als zur Sinterung der Bereiche mit einer kleineren Porengröße. Dies hatte bei der Erstellung von keramischen Filtern mit einer gradierten Gefügestruktur in der Vergangenheit daher häufig zur Folge, dass noch keine oder eine nicht ausreichende Sinterung des ersten Bereiches (mit einer größeren Körnung) stattgefunden hatte, wenn bereits die Sintertemperatur des zweiten Bereiches (mit einer feineren Körnung) erreicht war. Andersherum war der zweite Bereich teilweise bereits übersintert (wodurch sich aufgrund eines inhomogenen Kornwachstums Inhomogenitäten in der Gefügestruktur einstellen und die Porengröße, Porenverteilung und Porosität praktisch nicht mehr einstellbar ist; außerdem nimmt bei einer Übersinterung die Festigkeit ab), wenn die Sintertemperatur des ersten Bereiches gerade erst erreicht war.

Ferner kam es an der Grenzfläche zwischen den Bereichen unterschiedlicher Körnung zur Ausbildung Gefügefehlern, beispielsweise zur Ausbildung von Spalten oder Lunkern. Die Bereiche unterschiedlicher Körnung beziehungsweise unterschiedlicher Porengröße gingen in ihrem Grenzbereich daher regelmäßig nicht vollflächig ineinander über. Dies schränkte die Wirkung und Haltbarkeit des daraus erstellten Filters stark ein.

Die W02009124555 beschreibt die Herstellung eines dreilagigen Filters mit keramischen Schichten unterschiedlicher Porengrösse.

Der Erfindung liegt die Aufgabe zu Grunde, einen keramischen Filter auf Basis eines nichtoxidkeramischen Werkstoffs mit einer gradierten Gefügestruktur zur Verfügung zu stellen, bei dem die vorgenannten Probleme nicht auftreten. Insbesondere ist es Aufgabe der Erfindung, einen keramischen Filter auf Basis eines nichtoxidkeramischen Werkstoffs zur Verfügung zu stellen, der wenigstens zwei Bereiche unterschiedlicher Porengröße aufweist, die in ihrem Grenzbereich keine Gefügefehler aufweisen

Die erfindungsgemäße Lösung dieser Aufgabe beruht insbesondere auf zwei Erfindungsgedanken.

Nach dem ersten Erfindungsgedanken ist vorgesehen, dass die beiden Bereiche unterschiedlicher Porosität jeweils aus einer Körnung eines nichtoxidkeramischen Werkstoffs ausgebildet sind. Der erste Bereich ist dabei aus einer ersten, größeren (gröberen) Körnung des nichtoxidkeramischen Werkstoffs und der zweite Bereich aus einer zweiten, kleineren (feineren) Körnung des nichtoxidkeramischen Werkstoffs erstellt. Der erste Bereich ist dabei derart konfektioniert, dass er eine Sintertemperatur aufweist, die gegenüber der reinen Körnung des nichtoxidkeramischen Werkstoffs erniedrigt ist. Der zweite Bereich ist hingegen derart konfektioniert, dass er eine Sintertemperatur aufweist, die gegenüber der reinen Körnung des nichtoxidkeramischen Werkstoffs erhöht ist.

Erfindungsgemäß hat sich herausgestellt, dass es hierdurch möglich ist, die Sintertemperatur der Körnungen beider Bereiche auf den gleichen oder einen zumindest angenäherten Wert einzustellen.

Im Rahmen der Erfindung hat sich herausgestellt, dass es allein durch die Annäherung der Sintertemperaturen beider Bereiche unterschiedlicher Körnung nicht immer möglich ist, einen keramischen Filter zu erstellen, bei dem der Grenzbereich des ersten und zweiten Bereichs - also des Bereichs, an dem die beiden Bereiche ineinander übergehen - keine Gefügefehler aufweist.

Gemäß dem zweiten Erfindungsgedanken ist daher vorgesehen, zwischen den beiden Bereichen unterschiedlicher Körnung beziehungsweise unterschiedlicher Porengröße einen Übergangsbereich auszubilden. Durch diesen Übergangsbereich soll der Grenzbereich des ersten und zweiten Bereiches ohne Gefügefehler ausgebildet sein. Erfindungsgemäß hat sich herausgestellt, dass ein solcher Übergangsbereich dadurch ausbildbar ist, dass der Übergangsbereich eine Körnung des nichtoxidkeramischen Werkstoffs des ersten und zweiten Bereiches mit einer solchen Korngröße aufweist, die zwischen der Korngröße des ersten und zweiten Bereiches liegt.

Erfindungsgemäß ist demnach vorgesehen ein keramischer Filter, der folgendes umfasst:
Einen ersten Bereich auf Basis einer gesinterten Körnung eines nichtoxidkeramischen Werkstoffs;
einen zweiten Bereich auf Basis einer gesinterten Körnung des nichtoxidkeramischen Werkstoffs;
die Körnung des ersten Bereichs weist eine erste Korngröße auf;
die Körnung des zweiten Bereichs weist eine zweite Korngröße auf;
die erste Korngröße ist größer als der zweite Korngröße;
einen zwischen dem ersten Bereich und dem zweiten Bereich angeordneten Übergangsbereich auf Basis einer gesinterten Körnung des nichtoxidkeramischen Werkstoffs;
die Körnung des Übergangsbereichs weist eine Korngröße auf, der kleiner ist als die erste Korngröße und größer ist als die zweite Korngröße;
der erste Bereich weist wenigstens einen, die Sintertemperatur der Körnung des ersten Bereiches gegenüber der reinen Körnung erniedrigenden Stoff auf; der zweite Bereich weist wenigstens einen, die Sintertemperatur der Körnung des zweiten Bereiches gegenüber der reinen Körnung erhöhenden Stoff auf; der erste Bereich, der zweite Bereich und der Übergangsbereich bilden einen monolithischen, offenporigen Körper.

Der erste Bereich, der zweite Bereich und der Übergangsbereich sind jeweils auf Basis einer gesinterten Körnung (also Körnern) des gleichen nichtoxidkeramischen Werkstoffs erstellt. Bevorzugt ist der erfindungsgemäße keramische Filter mit einem nichtoxidkeramischen Werkstoff in Form wenigstens eines der folgenden Stoffe erstellt: Siliciumcarbid oder Borcarbid.

Soweit für den ersten Bereich, den zweiten Bereich und den Übergangsbereich eine Körnung in Form von Siliciumcarbid vorgesehen ist, liegt die gesinterte Körnung des ersten Bereiches, des zweiten Bereiches und des Übergangsbereichs in Form von rekristallisiertem Siliciumcarbid (RSiC) vor. Damit stellt sich der erfindungsgemäße keramische Filter als ein monolithischer, offenporiger Körper aus rekristallisiertem Siliciumcarbid (RSiC) dar. Wesentlich für die Erfindung ist dabei, dass tatsächlich ein Körper aus rekristallisiertem Siliciumcarbid vorliegt und aus keinem anderen Siliciumcarbidwerkstoff. da letztere nicht die erfindungsgemäß gewünschten Eigenschaften von RSiC aufweisen.

Im Gegensatz zu anderem Siliciumcarbidwerkstoffen, wie beispielsweise silikatisch gebundenem Siliciumcarbid, nitridgebundenem Siliciumcarbid (NSiC) oder reaktionsgebundenem siliciuminfiltriertem Siliciumcarbid (SiSiC) handelt es sich bei RSiC um einen hochreinen Siliciumcarbidwerkstoff, der praktisch vollständig aus reinem Siliciumcarbid (SiC) besteht. Zur Erstellung von rekristallisiertem Siliciumcarbid wird eine Körnung aus Siliciumcarbid gesintert, wodurch man rekristallisiertes Siliciumcarbid (RSiC) erhält. Ein solcher Werkstoff aus rekristallisiertem Siliciumcarbid zeichnet sich insbesondere durch seinen hohen Anteil an offener Porosität sowie durch seine hohe mechanische, chemische und thermische Belastbarkeit aus. Aus diesem Grund eignen sich Werkstoffe aus rekristallisiertem Siliciumcarbid hervorragend als keramische Filter. Vorteilhaft an Werkstoffen auf Basis von rekristallisiertem Siliciumcarbid ist ferner, dass diese eine verhältnismäßig genau einstellbare Porengröße und enge Porenverteilung aufweisen und sich aus dem kristallisierten Siliciumcarbid Körper mit einer hohen Maßgenauigkeit herstellen lassen, da die Siliciumcarbidkörnung weitgehend schwindungsfrei zu rekristallisiertem Siliciumcarbid sintert.

Vorteilhaft an rekristallisiertem Siliciumcarbid sind ferner seine Halbleitereigenschaften. Auf Grund dieser Halbleitereigenschaft lassen sich Filter aus rekristallisiertem Siliciumcarbid durch Anlegen einer elektrischen Spannung erhitzen, wodurch Filterrückstände in dem Filter ausgebrannt werden können.

Der erste Bereich des erfindungsgemäßen keramischen Filters weist eine gesinterte Körnung eines nichtoxidkeramischen Werkstoffs mit einer ersten Korngröße auf, der größer ist als die zweite Korngröße der gesinterten Körnung des zweiten Bereiches. Anders gesagt, weist der erste Bereich eine gröbere Körnung auf als der zweite Bereich. Wie oben bereits ausgeführt, führt eine gröbere Körnung zur Ausbildung einer größeren Porengröße. Der erste Bereich weist demnach Poren einer größeren Porengröße auf als der zweite Bereich.

Die "Porengröße" im Sinne dieser Erfindung bezeichnet die mittlere Porengröße des jeweiligen Bereiches. Diese mittlere Porengröße kann insbesondere bestimmt und definiert sein gemäß DIN 66133:1993-06.

Die "Korngröße" im Sinne dieser Erfindung bezeichnet die mittlere Korngröße der Körner der jeweiligen Körnung. Diese mittlere Korngröße kann insbesondere bestimmt und definiert sein als D₅₀- Wert, und zwar insbesondere gemäß FEPA Standard 42 GB 1984 R 1993. Alternativ kann die Korngröße insbesondere bestimmt und definiert sein gemäß EN 725-5:2007.

Die Körnung des ersten Bereiches kann beispielsweise eine erste Korngröße von wenigstens 8 µm, also beispielsweise auch von wenigstens 12 µm, wenigstens 14 µm, wenigstens 16 µm oder wenigstens 18 µm aufweisen. Eine Obergrenze der Korngröße der Körnung des ersten Bereiches kann beispielsweise bei einer ersten Korngröße von 56 µm liegen, also beispielsweise auch bei höchstens 50 µm, 36 µm, 32 µm, 28 µm, 24 µm oder höchstens 20 µm. Insgesamt kann die Körnung des ersten Bereiches demnach beispielsweise eine ersten Korngröße im Bereich von 8 bis 56 µm aufweisen.

Die Körnung des zweiten Bereiches kann beispielsweise eine zweite Korngröße von höchstens 30 µm aufweisen, also beispielsweise auch eine zweiten Korngröße von höchstens 20 µm, 16 µm, 12 µm, 8 µm, 6 µm, 4 µm oder von höchstens 3 µm. Eine Untergrenze der Korngröße der Körnung des zweiten Bereiches kann beispielsweise bei einer zweiten Korngröße von 1 µm liegen, also beispielsweise auch bei einer zweiten Korngröße von wenigstens 1,5 µm, von wenigstens 2 µm oder von wenigstens 2,5 µm. Demnach kann die Körnung des zweiten Bereiches beispielsweise eine zweite Korngröße im Bereich von 1 bis 30 µm aufweisen.

Häufig beträgt die Porengröße in gesinterten Körpern aus nichtoxidkeramischem Werkstoff etwa 40 % der Korngröße der Körner, aus denen der Körper gesintert beziehungsweise erstellt ist. Entsprechende Werte kann auch die Porengröße des ersten und zweiten Bereiches sowie des Übergangsbereiches bei dem erfindungsgemäßen Filter einnehmen.

Die Porengröße des ersten Bereiches kann demnach beispielsweise im Bereich von 3 bis 22 µm liegen. Allgemein kann der erste Bereich eine Porengröße von wenigstens 3 µm aufweisen, also beispielsweise auch eine Porengröße von wenigstens 4 µm, 5 µm, 6 µm oder von wenigstens 7 µm. Die Obergrenze der Porengröße des ersten Bereiches kann beispielsweise bei einer Porengröße von 22 µm liegen, also beispielsweise auch bei höchstens 20 µm, 15 µm, 13 µm, 11 µm, 10 µm oder höchstens 8 µm.

Die Porengröße des zweiten Bereiches kann beispielsweise bei wenigstens 0,4 µm liegen, also beispielsweise auch bei wenigstens 0,6 µm, 0,8 µm oder bei wenigstens 1 µm. Die Obergrenze der Porengröße des zweiten Bereiches kann beispielsweise bei 10 µm liegen, also beispielsweise auch bei 6 µm, 5 µm, 3 µm, bei 2,5 µm, bei 2 µm, bei 1,5 µm oder bei 1 µm. Danach kann die Porengröße des zweiten Bereiches beispielsweise zwischen 0,4 und 10 µm liegen.

Die Werte der Korngröße und der Porengröße des ersten und zweiten Bereiches können grundsätzlich beliebig weit auseinander liegen. Bevorzugt kann die erste Korngröße wenigstens 1,2 mal höher sein als die zweite Korngröße, also beispielsweise auch wenigstens 1,5 mal, 2 mal, 4 mal, 6 mal oder wenigstens 10 mal höher liegen als die zweite Korngröße. Ferner kann die erste Korngröße beispielsweise höchstens 30 mal, also beispielsweise auch höchstens 20 mal, 15 mal, 10 mal oder höchstens 8 mal höher liegen als die zweite Korngröße. Die vorgenannten Werte gelten entsprechend für die Werte der Porengröße des ersten und zweiten Bereiches.

Die "Porosität" im Sinne dieser Erfindung bezeichnet den Anteil des Porenvolumens am Gesamtvolumen des jeweiligen Bereiches. Da keramische Werkstoffe auf Basis von gesintertem SiC oder BC praktisch keine geschlossenen Poren aufweisen, wird die Porosität bei dem erfindungsgemäßen keramischen Filter ausschließlich durch die offenen Poren, auch "Kanalporen" genannt, gebildet. Die Porosität kann insbesondere bestimmt und definiert sein gemäß EN 993-1:1995 und EN 993-2:1995.

Die Porosität des ersten Bereiches, des zweiten Bereiches und des Übergangsbereiches kann beispielsweise wenigstens 30 % betragen, also jeweils auch wenigstens 35 %, 40 %, 45 % oder wenigstens 50 %. Gemäß einer Obergrenze kann die Porosität des ersten und zweiten Bereiches sowie des Übergangsbereiches beispielsweise maximal 70 % betragen, also beispielsweise auch maximal 65 %, 60 %, 55 % oder maximal 50 %. Die Porosität des ersten und zweiten Bereiches sowie des Übergangsbereiches kann gleich oder verschieden sein.

Die Dicke des ersten und zweiten Bereiches ist grundsätzlich beliebig. Sie kann bevorzugt relativ gering sein und beispielsweise im Bereich von 0,1 mm bis 10 mm liegen, insbesondere beispielsweise im Bereich von 0,5 mm bis 5 mm. Insbesondere die Dicke des zweiten Bereiches kann bevorzugt relativ gering und insbesondere auch geringer sein als die Dicke des ersten Bereiches. Die "Dicke" des ersten und zweiten Bereiches sowie des Übergangsbereiches in Sinne dieser Erfindung bezeichnet die "aktive" Stärke des jeweiligen Bereiches, also die durchschnittliche Mindestdicke des jeweiligen Bereiches, die ein durch den Filter strömendes Fluid wenigstens zu durchströmen hat.

Nach einer bevorzugten Ausführungsform, sind der erste Bereich und der zweite Bereiche jeweils durch ein keramisches Foliengießverfahren erstellt. Beim keramischen Foliengießverfahren wird ein keramischer Grünkörper in Form einer Folie erstellt (nachfolgend auch als "Grünfolie" bezeichnet). Diese Grünfolie zeichnet sich durch eine hohe Flexibilität sowie eine einfache und vielfältige Bearbeitbarkeit aus, so dass sie durch verschiedene Formgebungsverfahren bearbeitbar ist.

Wie ausgeführt, weist der erste Bereich weist wenigstens einen, die Sintertemperatur der Körnung des ersten Bereiches gegenüber der reinen Körnung erniedrigenden Stoff (nachfolgend auch "Sinterbeschleuniger" genannt) und der zweite Bereich wenigstens einen, die Sintertemperatur der Körnung des zweiten Bereiches gegenüber der reinen Körnung erhöhenden Stoff (nachfolgend auch "Sinterverzögerer" genannt) auf. Mit anderen Worten: Der erste Bereich weist einen Stoff ("Sinterbeschleuniger") auf, der dazu führt, dass die Sintertemperatur der Körnung des ersten Bereiches niedriger ist als die Sintertemperatur dieser Körnung, die den Stoff nicht aufweist; gleichzeitig weist der zweite Bereich einen Stoff ("Sinterverzögerer") auf, der dazu führt, dass die Sintertemperatur der Körnung des zweiten Bereiches höher ist als die Sintertemperatur dieser Körnung, die den Stoff nicht aufweist

Erfindungsgemäß hat sich herausgestellt, dass die Sintertemperatur der Körnungen des ersten und zweiten Bereiches durch das Vorhandensein entsprechender Stoffe einander annäherbar oder sogar auf die gleiche Temperatur einstellbar ist.

Als Problematisch zur Verwirklichung dieses Erfindungsgedankens hat sich erwiesen, dass entsprechende Sinterbeschleuniger und Sinterverzögerer für nichtoxidkeramische Werkstoffen aus dem Stand der Technik nicht bekannt sind. Insbesondere gilt dies für alle nichtoxidkeramischen Werkstoffe in Form von Siliciumcarbid zur Erstellung eines Werkstoffes auf Basis von rekristallisiertem Siliziumcarbid sowie für einen nichtoxidkeramischen Werkstoff in Form von Borcarbid zur Erstellung eines nichtoxidkeramischen Körpers hieraus.

Erfindungsgemäß hat sich nunmehr herausgestellt, dass die folgenden Stoffe Sinterbeschleuniger für nichtoxidkeramische Werkstoffe, insbesondere für solche auf Basis von SiC oder BC, darstellen: Aluminium, Aluminiumverbindungen (insbesondere Hydrargillit (Al(OH)₃), Gibbsit (Al (OH)₃), Böhmit (AlO(OH)) oder Korund (Al₂O₃)), Aluminiumnitrid (AIN), Aluminium-Bor-Verbindungen (insbesondere Aluminiumdibirid (AlB₂) oder Aluminiumdodekaborid (AlB₁₂)), Bor, Borverbindungen (insbesondere Boroxid (B₂O₃)), Bornitrid (BN) oder Bor-Silicium-Verbindungen (SiB₄ oder SiB₆). Diese Stoffe können einzeln oder in Mischungen oder auch in Verbindungen aus den vorgenannten Stoffen in dem ersten Bereich vorliegen beziehungsweise als Sinterbeschleuniger zur Erstellung des ersten Bereiches verwendet werden.

Erfindungsgemäß hat sich ferner herausgestellt, dass die folgenden Stoffe Sinterverzögerer für nichtoxidkeramische Werkstoffe, insbesondere für solche auf Basis von SiC oder BC, darstellen: Zirkon oder Zirkonverbindungen (insbesondere Zirkondioxid (ZrO₂)). Diese Stoffe können einzeln oder in Mischungen oder auch in Verbindungen aus den vorgenannten Stoffen in dem zweiten Bereich vorliegen beziehungsweise als Sinterverzögerer zur Erstellung des zweiten Bereiches verwendet werden.

Der erste Bereich weist einen solchen Anteil an Sinterbeschleuniger und der zweite Bereich weist einen solchen Anteil an Sinterverzögerer auf, dass die Sintertemperatur der Körnung des ersten und zweiten Bereiches aneinander angenähert oder auch im Wesentlichen gleich ist. Nach einer Ausführungsform ist vorgesehen, dass die Differenz der Sintertemperatur der Körnungen des ersten Bereiches und des zweiten Bereiches nicht mehr als 150° C beträgt, bevorzugt nicht mehr als 100°C und besonders bevorzugt nicht mehr als 50° C.

Der Sinterbeschleuniger kann in einem Anteil von 0,5 bis 5 Masse-%, also beispielsweise auch in einem Anteil von 1 bis 3 Masse-% vorliegen (jeweils bezogen auf die Gesamtmasse an elementarem Aluminium und Bor an der Gesamtmasse des ersten Bereiches).

Der Sinterverzögerer kann in einem Anteil von 0,5 bis 5 Masse-%, also beispielsweise auch in einem Anteil von 1 bis 3 Masse-% vorliegen (jeweils bezogen auf die Gesamtmasse an elementarem Zirkon an der Gesamtmasse des zweiten Bereiches).

Zwischen dem ersten Bereich und dem zweiten Bereich ist ein Übergangsbereich auf Basis einer gesinterten Körnung des nichtoxidkeramischen Werkstoffes des ersten und zweiten Bereichs angeordnet. Die Körnung des Übergangsbereichs weist eine Korngröße auf, die kleiner ist als die Korngröße der Körnung des ersten Bereichs und größer ist als die Korngröße der Körnung des zweiten Bereichs.

Mit anderen Worten: Der Übergangsbereich stellt eine Zwischenschicht zwischen dem ersten und zweiten Bereich dar, die eine Korngröße aufweist, die zwischen der ersten und zweiten Korngröße liegt.

Überraschenderweise hat sich erfindungsgemäß herausgestellt, dass ein entsprechend ausgebildeter Übergangsbereich eine hervorragende Verbindung zwischen dem ersten Bereich und dem zweiten Bereich darstellt. Insbesondere ermöglicht ein entsprechend konfektionierter Übergangsbereich, dass der erste Bereich und der zweite Bereich im Bereich des Übergangsbereiches ohne Gefügefehler ineinander übergehen.

Die Dicke des Übergangsbereichs kann verhältnismäßig gering sein und insbesondere geringer sein als die Dicke des ersten Bereichs und des zweiten Bereichs. Beispielsweise kann die Dicke des Übergangsbereiches im Bereich von 50 bis 1000 µm liegen, also beispielsweise auch im Bereich von 50 bis 500 µm oder von 50 bis 200 µm. Nach einer Ausführungsform ist vorgesehen, dass die Dicke des Übergangsbereichs wenigstens das 3-fache, also beispielsweise auch wenigstens das 6-fache oder wenigstens das 10-fache der Korngröße der Körner des ersten Bereiches beträgt. Als Maximaldicke für den Übergangsbereich kann vorgesehen sein, dass dessen Dicke beispielsweise maximal das 20-fache, also beispielsweise auch maximal das 15-flache oder das 10-fache der Korngröße der Körner des ersten Bereiches beträgt. Demnach kann die Dicke des Übergangsbereichs beispielsweise das 3-fache bis 20-fache der Korngröße der Körnung des ersten Bereiches betragen.

Während der erste Bereich und der zweite Bereich bevorzugt jeweils nur ein enges Kornband aufweisen, also eine Körnung mit einer Korngröße innerhalb enger Grenzen, kann hinsichtlich der Körnung des Übergangsbereiches vorgesehen sein, dass dieser eine Körnung mit Körnern unterschiedlicher Korngröße aufweist.

Bevorzugt kann vorgesehen sein, dass der Übergangsbereich eine Körnung mit zwei Korngrößen aufweist, die jeweils der ersten Korngröße und der zweiten Korngröße entsprechen. Mit anderen Worten: Die Körnung des Übergangsbereiches ist eine Mischung von Körnern, die jeweils der Korngröße der Körnung der ersten und zweiten Bereiches entsprechen. Hieraus ergibt sich - rechnerisch - insgesamt eine Korngröße, die zwischen der ersten und zweiten Korngröße liegt.

Die Porengröße des Übergangsbereichs kann bevorzugt zwischen den Werten des ersten und zweiten Bereiches liegen, also bevorzugt zwischen 0,4 und 22 µm.

Der erste Bereich, der zweite Bereich und der Übergangsbereich bilden einen monolithischen, offenporigen Körper, der hervorragend als keramischer Filter verwendbar ist.

Neben dem ersten und zweiten Bereich sowie dem Übergangsbereich kann der erfindungsgemäße Filter noch einen oder mehrere weitere Bereiche, insbesondere auch filteraktive Bereiche umfassen. Beispielsweise können der erste und zweite Bereich sowie der Übergangsbereich Bestandteil eines Filters sein, der zahlreiche Bereiche mit einer gradierten Gefügestruktur umfasst. Bevorzugt können sämtliche oder zumindest einige der benachbarten Bereiche eines solchen Filters dabei jeweils die vorbezeichneten Merkmale des ersten und zweiten Bereiches aufweisen und über einen Übergangsbereich mit den vorgenannten Merkmalen miteinander in Kontakt stehen. Diese Bereiche sind hinsichtlich ihrer Schichtdicke variabel und können daher leicht den jeweiligen Anforderungen angepasst werden.

Grundsätzlich kann der erfindungsgemäße Filter für beliebige Filteranwendungen verwendet werden. Erfindungsgemäß hat sich herausgestellt, dass der erfindungsgemäße Filter insbesondere hervorragend als Dieselpartikelfilter verwendbar ist, also als Filter zur Filterung von Rußpartikeln aus dem Abgasstrom eines Dieselmotors.

Weiterer Gegenstand der Erfindung ist ein Verfahren zur Erstellung eines keramischen Filters, das folgendes umfasst:
Bereitstellung eines ersten Versatzes auf Basis einer Körnung eines nichtoxidkeramischen Werkstoffs;
Bereitstellung eines zweiten Versatzes auf Basis einer Körnung des nichtoxidkeramischen Werkstoffs;
die Körnung des ersten Versatzes weist eine erste Korngröße auf;
die Körnung des zweiten Versatzes weist eine zweite Korngröße auf;
die erste Korngröße ist größer als die zweite Korngröße;
Bereitstellung eines dritten Versatzes auf Basis einer Körnung des nichtoxidkeramischen Werkstoffs;
die Körnung des dritten Versatzes weist eine Korngröße auf, die kleiner ist als die erste Korngröße und größer ist als die zweite Korngröße;
der erste Versatz weist wenigstens einen die Sintertemperatur der Körnung des ersten Versatzes gegenüber der reinen Körnung erniedrigenden Stoff auf; der zweite Versatz weist wenigstens einen die Sintertemperatur der Körnung des zweiten Versatzes gegenüber der reinen Körnung erhöhenden Stoff auf; der erste, zweite und dritte Versatz werden lagenweise angeordnet, wobei der dritte Versatz zwischen dem ersten und zweiten Versatz angeordnet wird; die lagenweise angeordneten Versätze werden zu einem monolithischen, offenporigen Körper gesintert.

Das erfindungsgemäße Verfahren kann insbesondere zur Erstellung des zuvor beschriebenen keramischen Filters dienen. Sämtliche der zuvor zum erfindungsgemäßen Filter gemachten Ausführungen - insbesondere auch zur Körnung, Korngröße und zu den Sintgerbeschleunigern und -verzögerern - gelten für das erfindungsgemäße Verfahren insoweit entsprechend. Dabei dient der erste Versatz zur Erstellung des ersten Bereiches des keramischen Filters, der zweite Versatz zur Erstellung des zweiten Bereiches des keramischen Filters und der dritte Versatz zur Erstellung des Übergangsbereichs des keramischen Filters. Das erfindungsgemäße Verfahren wird dabei derart ausgeführt, dass bei Sinterung der lagenweise angeordneten Versätze aus dem ersten Versatz der erste Bereich, aus dem zweiten Versatz der zweite Bereich und aus dem dritten Versatz der Übergangsbereich erstellt wird.

Der nichtoxidkeramische Werkstoff, aus dem die Körnung des ersten, zweiten und dritten Versatzes besteht, kann insbesondere eine Körnung aus Silicumcarbid oder Borcarbid sein. Ferner können der erste, zweite und dritte Versatz die für nichtoxidkeramische Werkstoffe bekannten Bindemittel umfassen, beispielsweise organische Bindemittel, wie zum Beispiel wenigstens eines der folgenden Bindemittel: Wachse, Polymere, lösemittelhaltigen Systeme oder thermoplastische System. Diese Bindemittel brennen beim Sintern praktisch vollständig aus.

Die Korngröße der Körnung des ersten, zweiten und dritten Versatzes kann der Korngröße des jeweiligen Bereiches des erfindungsgemäßen keramischen Körpers entsprechen, zu deren Erstellung der jeweilige Versatz dient und die wie zuvor beschrieben ist. Entsprechend kann die Korngröße der Körnung des ersten Versatzes der Korngröße der Körnung des ersten Bereiches, die Korngröße der Körnung des zweiten Versatzes der Korngröße der Körnung des zweiten Bereiches und die Korngröße der Körnung des dritten Versatzes der Korngröße der Körnung des Übergangsbereiches entsprechen.

Bevorzugt ist vorgesehen, dass die Körnung des nichtoxidkeramischen Werkstoffs in dem ersten, zweiten und dritten Versatz jeweils in einer bi-modalen Kornverteilung vorliegt. Eine solche bi-modale Kornverteilung in Versätzen auf Basis von nichtoxidkeramischen Werkstoffen ist aus dem Stand der Technik bekannt. Bei einer solch bi-modalen Kornverteilung liegt neben einer gröberen Körnung (im Stand der Technik auch "Grobkorn" genannt) des nichtoxidkeramischen Werkstoffes eine wesentlich feinere Körnung (im Stand der Technik auch "Feinkorn" genannt) vor, die auf Grund ihrer großen Oberflächenenergie beim Sintern durch Verdampfung aufgezehrt wird und als Materiallieferant für ein geringfügiges Kornwachstum der gröberen Körnung dient, aufgrund dessen die Körner der Grobfraktion beim Sinterbrand zusammensintern. Das Feinkorn liegt bevorzugt in einer Korngröße < 1 µm vor. Dieses Feinkorn < 1 µm ist bei den hierin gemachten Angaben zur Korngröße der jeweiligen Körnung nicht berücksichtigt. Die hierin gemachten Angaben zur Korngröße der Körnung des nichtoxidkeramischen Werkstoffes beziehen sich daher allein auf die gröbere Körnung des nichtoxidkeramischen Werkstoffes. Der Anteil der Feinfraktion am jeweiligen Versatz kann den aus dem Stand der Technik bekannten Anteilen entsprechen; beispielsweise kann der Anteil der Feinfraktion bis zu 70 Masse-%, bezogen auf die Gesamtmasse der Körner aus SiC (also Grobfraktion und Feinfraktion) des jeweiligen Versatzes, betragen.

Die im Rahmen des erfindungsgemäßen Verfahrens eingesetzten Stoffe, durch die die Sintertemperatur der Körnung des ersten Versatzes gegenüber der reinen Körnung erniedrigt wird ("Sinterbeschleuniger"), beziehungsweise durch die die Sintertemperatur der Körnung des zweiten Versatzes gegenüber der reinen Körnung erhöht wird ("Sinterverzögerer"), entsprechen den oben genannten Sinterbeschleunigern und Sinterverzögerern, ebenfalls in den angegebenen Anteilen.

Der erste, zweite und dritte Versatz werden lagenweise, also schichtweise, angeordnet, wobei der dritte Versatz zwischen dem ersten und zweiten Versatz angeordnet wird.

Der erste und zweite Versatz werden bevorzugt als Grünkörper bereitgestellt, also als geformter und ungebrannter, gegebenenfalls getrockneter Körper aus einem keramischem Versatz. Wenigstens einer des ersten und zweiten Versatzes, bevorzugt jedoch sowohl der erste als auch der zweite Versatz, werden als Grünkörper in Form einer Grünfolie bereitgestellt, also als ungebrannte Folie, die durch ein keramisches Foliengießverfahren erstellt worden ist. Entsprechende Grünfolien sind hochflexibel und leicht verarbeitbar, so dass ein jeweils in Form einer Grünfolie bereitgestellter erster und zweiter Versatz besonders einfach lagenweise beziehungsweise schichtweise aufeinander angeordnet werden können.

Der dritte Versatz kann bevorzugt in flüssiger oder pastöser Form bereitgestellt werden, also beispielsweise als Schlicker oder Suspension. In dieser Form kann der dritte Versatz beispielsweise auf eine Oberfläche des als Grünkörpers vorliegenden ersten Versatzes und/oder auf eine Oberfläche des als Grünkörpers vorliegenden zweiten Versatzes aufgetragen werden. Der jeweils als Grünkörper vorliegende erste und zweite Versatz werden anschließend derart lagenweise auf- beziehungsweise zueinander angeordnet, dass der dritte Versatz zwischen dem ersten und zweiten Versatz angeordnet ist.

Insbesondere soweit der erste und zweite Versatz als Grünfolie konfektioniert sind, können der lagenweise angeordnete erste, zweite und dritte Versatz vor dem Sinterbrand in eine beliebige Form gebracht werden, also beispielsweise gerollt oder gefaltet werden. Entsprechend gerollte oder gefaltete Filter, die aus keramischen Folien erstellt sind, sind aus dem Stand der Technik bekannt.

Der Grünkörper, der aus dem lagenweise angeordneten ersten, zweiten und dritten Versatz erstellt ist, wird anschließend durch Temperaturbehandlung gesintert, insbesondere zu dem zuvor beschriebenen keramischen Filter.

Die Sinterung erfolgt unter Wärmebehandlung, vorzugsweise bei einer Temperatur im Bereich von 2.000 bis 2.500°C. Dabei kann der aus dem ersten, zweiten und dritten Versatz erfindungsgemäß konfektionierte Grünkörper zu einem offenporigen, monolithischen Körper ohne Gefügefehler gesintert werden.

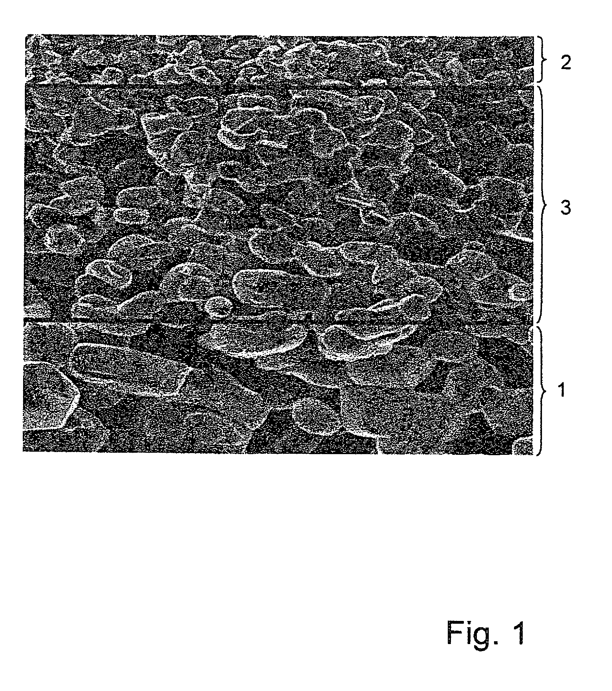

Das Gefüge eines Ausführungsbeispiels eines erfindungsgemäßen keramischen Filters soll anhand der nachfolgenden Figur und der zugehörigen Beschreibung näher erläutert werden. Dabei zeigt
- Figur 1: einen vergrößerten Ausschnitt eines keramischen Filters im Bereich des Übergangsbereiches.

Konkret zeigt Figur 1 die Aufnahme eines Rasterelektronenmikroskops (REM) eines keramischen Filters gemäß der vorliegenden Erfindung im Bereich des Übergangsbereiches.

Der Übergangsbereich ist mit dem Bezugszeichen 3 gekennzeichnet. Auf einer Seite (in Figur 1 unten) schließt sich an den Übergangsbereich 3 ein erster Bereich an. Der Abschnitt des ersten Bereiches, der auf der Abbildung nach Figur 1 zu erkennen ist, ist mit dem Bezugszeichen 1 gekennzeichnet. Auf der anderen Seite des Übergangsbereiches 3 (in Figur 1 oben) schließt sich an den Übergangsbereich 3 ein zweiter Bereich an. Der Abschnitt des zweiten Bereiches, der in der Abbildung nach Figur 1 zu erkennen ist, ist mit der Bezugsziffer 2 gekennzeichnet.

Der erste Bereich 1, der zweite Bereich 2 sowie der Übergangsbereich 3 bestehen aus rekristallisiertem Siliciumcarbid (RSiC).

Die Körnung des ersten Bereiches 1 besteht aus Körnern aus Siliciumcarbid einer Körngröße von 18 µm. Die Porengröße des ersten Bereiches liegt bei etwa 7 µm. Die Porosität des ersten Bereiches 1 beträgt etwa 45 %.

Die Körnung des zweiten Bereiches 2 besteht aus Körnern aus Siliciumcarbid mit einer Korngröße von etwa 5 µm. Die Porengröße des zweiten Bereiches liegt bei etwa 2 µm. Die Porosität des zweiten Bereiches liegt bei etwa 45 %.

Der Übergangsbereich 3 weist eine Körnung von Körnern aus Siliciumcarbid mit einer Korngröße von etwa 12 µm auf. Dabei weist die Körnung) des Übergangsbereiches 3 insbesondere Körner aus Siliciumcarbid in zwei Korngrößen auf, die jeweils der Korngröße der Körner aus Siliciumcarbid des ersten und zweiten Bereiches entsprechen. Beide Korngrößen weist der Übergangsbereich 3 zu etwa gleichen Teilen auf, so dass sich rechnerisch eine Korngröße von etwa 12 µm ergibt. Die Porengröße der Poren des Übergangsbereiches 3 liegt ebenfalls zwischen den Porengrößen des ersten und zweiten Bereiches, konkret bei etwa 5 µm. Die Porosität des Übergangsbereiches 3 entspricht den Porositäten des ersten und zweiten Bereiches mit etwa 45 %.

Neben Körnern aus Siliciumcarbid umfasst der erste Bereich 1 einen Sinterbeschleuniger in Form von Aluminiumdibirid (AlB₂) in einem Anteil von 2 Masse-% (bezogen auf die Gesamtmasse des ersten Bereichs).

Der zweite Bereich umfasst einen Sinterverzögerer in Form von Zirkondioxid (ZrO₂) in einem Anteil vom 2 Masse-% (bezogen auf den Anteil an elementarem Zirkon an der Gesamtmasse des zweiten Bereiches).

Der Übergangsbereich 3 hat eine Dicke von etwa 100 µm. In Figur 1 sind die Grenzen des Übergangsbereichs 3 durch schwarze Linien angedeutet. Gut zu erkennen ist, dass der erste Bereich 1, der Übergangsbereich 2 und der zweite Bereich 3 ohne Gefügefehler unmittelbar ineinander übergehen und hierdurch einen monolithischen keramischen Körper ausbilden.

Zur Erstellung des keramischen Filters, von dem in Figur 1 ein Ausschnitt dargestellt ist, wurde zunächst ein erster Versatz in Form einer Grünfolie bereitgestellt. Diese Grünfolie umfasste Körner aus Siliciumcarbid mit einer Korngröße von 18 µm und zudem eine Feinfraktion aus Siliciumcarbid in einer Korngröße < 1 µm in einem Anteil von 30 Masse-% (bezogen auf die Gesamtmasse der Körner aus SiC (also Grobfraktion und Feinfraktion) des ersten Versatzes). Ferner umfasste die Grünfolie des ersten Versatzes ein organisches Bindemittel sowie einen Sinterbeschleuniger in Form von Aluminiumdibirid.

Auf diese Grünfolie des ersten Versatzes wurde der in Form einer Suspension vorliegende dritte Versatz in einer Dicke von etwa 100 µm aufgetragen. Der dritte Versatz umfasste Körner aus Siliciumcarbid mit einer Korngröße von 18 µm sowie einer Korngröße von 5 µm zu jeweils etwa 50 %. Ferner umfasste der dritte Versatz eine Feinfraktion aus Körnern aus Siliciumcarbid in einer Korngröße < 1 µm in einem Anteil von 40 Masse-% (bezogen auf die Gesamtmasse der Körner aus SiC (also Grobfraktion und Feinfraktion) des dritten Versatzes). Daneben umfasste der dritte Versatz ein organisches Bindemittel.

Der zweite Versatz wurde ebenfalls in Form einer Grünfolie bereitgestellt und auf die Seite der aus dem ersten Versatz gebildeten Grünfolie aufgelegt, auf die der dritte Versatz aufgetragen war. Der zweite Versatz umfasste Körner aus Siliciumcarbid mit einer Korngröße von etwa 5 µm und darüber hinaus eine Feinfraktion < 1 µm (bezogen auf die Gesamtmasse der Körner aus SiC (also Grobfraktion und Feinfraktion) des zweiten Versatzes). Daneben umfasste der zweite Versatz ein organisches Bindemittel sowie einen Sinterverzögerer in Form von Zirkondioxid.

Die entsprechend zu einem Grünkörper lagenweise angeordneten Versätze wurden anschließend bei etwa 2.000°C zu dem monolithischen, offenporigen Körper gesintert, von dem ein Ausschnitt in Figur 1 dargestellt ist. Dabei sinterte der erste Versatz zum ersten Bereich 1, der zweite Versatz zum zweiten Bereich 2 und der dritte Versatz zum Übergangsbereich 3.

## Patentansprüche

1. Keramischer Filter, der folgendes umfasst:
a) einen ersten Bereich auf Basis einer gesinterten Körnung eines nichtoxidkeramischen Werkstoffs;
b) einen zweiten Bereich auf Basis einer gesinterten Körnung des nichtoxidkeramischen Werkstoffs;
c) die Körnung des ersten Bereichs weist eine erste Korngröße auf;
d) die Körnung des zweiten Bereichs weist eine zweiten Korngröße auf;
e) die erste Korngröße ist größer als die zweite Korngröße;
f) einen zwischen dem ersten Bereich und dem zweiten Bereich angeordneten Übergangsbereich auf Basis einer gesinterten Körnung des nichtoxidkeramischen Werkstoffs;
g) die Körnung des Übergangsbereichs weist eine Korngröße auf, der kleiner ist als die erste Korngröße und größer ist als die zweite Korngröße;
h) der erste Bereich weist wenigstens einen, die Sintertemperatur der Körnung des ersten Bereiches gegenüber der reinen Körnung erniedrigenden Stoff auf;
i) der zweite Bereich weist wenigstens einen, die Sintertemperatur der Körnung des zweiten Bereiches gegenüber der reinen Körnung erhöhenden Stoff auf;
j) der erste Bereich, der zweite Bereich und der Übergangsbereich bilden einen monolithischen, offenporigen Körper.

2. Keramischer Filter nach Anspruch 1 aus einem niehtoxidkeramischen Werkstoff in Form wenigstens eines der folgenden Stoffe:
Siliciumcarbid oder Borcarbid.

3. Keramischer Filter nach Anspruch 1 aus einem ersten Bereich, einem zweiten Bereich und einem Übergangsbereich in Form von rekristallisiertem Siliciumkarbid.

4. Keramischer Filter nach Anspruch 1, bei dem der erste Bereich und der zweite Bereich jeweils mittels eines keramischen Foliengießverfahrens erstellt sind.

5. Keramischer Filter nach Anspruch 1 mit einer ersten Korngröße im Bereich von 8 bis 56 µm.

6. Keramischer Filter nach Anspruch 1 mit einer zweiten Korngröße im Bereich von 1 bis 30 µm.

7. Keramischer Filter nach Anspruch 1 mit einer Porosität des ersten Bereichs von 30 bis 70 %.

8. Keramischer Filter nach Anspruch 1 mit einer Porosität des zweiten Bereichs von 30 bis 70 %.

9. Keramischer Filter nach Anspruch 1, bei dem die Dicke des Übergangsbereichs das Dreifache bis Zwanzigfache der ersten Korngröße beträgt.

10. Keramischer Filter nach Anspruch 1 mit einem, die Sintertemperatur der Körnung des ersten Bereiches gegenüber der reinen Körnung erniedrigenden Stoff in Form wenigstens eines der folgenden Stoffe:
Aluminium, Aluminiumverbindungen, Bor, Borverbindungen,
Aluminim-Bor-Verbindungen oder Mischungen daraus..

11. Keramischer Filter nach Anspruch 1 mit einem, die Sintertemperatur der Körnung des zweiten Bereiches gegenüber der reinen Körnung erhöhenden Stoff in Form wenigstens eines der folgenden Stoffe:
Zirkon, Zirkonverbindungen oder Mischungen daraus.

12. Verfahren zur Erstellung eines keramischen Filters, das folgendes umfasst:
a) Bereitstellung eines ersten Versatzes auf Basis einer Körnung eines nichtoxidkeramischen Werkstoffs;
b) Bereitstellung eines zweiten Versatzes auf Basis einer Körnung des nichtoxidkeramischen Werkstoffs;
c) die Körnung des ersten Versatzes weist eine erste Korngröße auf;
d) die Körnung des zweiten Versatzes weist eine zweite Korngröße auf;
e) die erste Korngröße ist größer als die zweite Korngröße;
f) Bereitstellung eines dritten Versatzes auf Basis einer Körnung des nichtoxidkeramischen Werkstoffs;
g) die Körnung des dritten Versatzes weist eine Korngröße auf, die kleiner ist als die erste Korngröße und größer ist als die zweite Korn größe;
h) der erste Versatz weist wenigstens einen, die Sintertemperatur der Körnung des ersten Versatzes gegenüber der reinen Körnung erniedrigenden Stoff auf;
i) der zweite Versatz weist wenigstens einen, die Sintertemperatur der Körnung des zweiten Versatzes gegenüber der reinen Körnung erhöhenden Stoff auf;
j) der erste, zweite und dritte Versatz werden lagenweise angeordnet, wobei der dritte Versatz zwischen dem ersten und zweiten Versatz angeordnet wird;
k) die lagenweise angeordneten Versätze werden zu einem monolithischen, offenporigen Körper gesintert.

## Claims

1. A ceramic filter, comprising the following:
a) a first region based on a sintered grain of a non-oxide ceramic material;
b) a second region based on a sintered grain of the non-oxide ceramic material;
c) the grain of the first region has a first grain size;
d) the grain of the second region has a second grain size;
e) the first grain size is greater than the second grain size;
f) a transition region, arranged between the first region and the second region, based on a sintered grain of the non-oxide ceramic material;
g) the grain of the transition region has a grain size that is smaller than the first grain size and is greater than the second grain size;
h) the first region has at least one substance that lowers the sintering temperature of the grain of the first region compared to the pure grain;
i) the second region has at least one substance that increases the sintering temperature of the grain of the second region compared to the pure grain;
j) the first region, the second region and the transition region form a monolithic, open-pored body.

2. The ceramic filter according to Claim 1, formed from a non-oxide ceramic material in the form of at least one of the following substances:
silicon carbide or boron carbide.

3. The ceramic filter according to Claim 1, formed from a first region, a second region and a transition region in the form of recrystallized silicon carbide.

4. The ceramic filter according to Claim 1, wherein the first region and the second region are each produced by means of a ceramic tape casting method.

5. The ceramic filter according to Claim 1, with a first particle size in the range from 8 to 56 µm.

6. The ceramic filter according to Claim 1, with a second grain size in the range from 1 to 30 µm.

7. The ceramic filter according to Claim 1, with a porosity of the first region from 30 to 70 %.

8. The ceramic filter according to Claim 1, with a porosity of the second region from 30 to 70 %.

9. The ceramic filter according to Claim 1, wherein the thickness of the transition region is three times to twenty times the first particle size.

10. The ceramic filter according to Claim 1, with a substance that lowers the sintering temperature of the grain of the first region compared to the pure grain in the form of at least one of the following substances:
aluminium, aluminium compounds, boron, boron compounds, aluminium-boron compounds, or mixtures thereof.

11. The ceramic filter according to Claim 1, with a substance that increases the sintering temperature of the grain of the second region compared to the pure grain in the form of at least one of the following substances:
zirconium, zirconium compounds, or mixtures thereof.

12. A method for producing a ceramic filter, said method comprising the following steps:
a) providing a first batch based on a grain of a non-oxide ceramic material;
b) providing a second batch based on a grain of the non-oxide ceramic material;
c) the grain of the first batch has a first grain size;
d) the grain of the second batch has a second grain size;
e) the first grain size is greater than the second grain size;
f) providing a third batch based on a grain of the non-oxide ceramic material;
g) the grain of the third batch has a grain size that is smaller than the first grain size and is greater than the second grain size;
h) the first batch has at least one substance that lowers the sintering temperature of the grain of the first batch compared to the pure grain;
i) the second batch has at least one substance that increases the sintering temperature of the grain of the second batch compared to the pure grain;
j) the first, second and third batch are arranged in layers, wherein the third batch is arranged between the first and second batch;
k) the batches arranged in layers are sintered to form a monolithic, open-pored body.

## Revendications

1. Filtre céramique, comprenant :
a) une première zone à base de granulés frittés d'un matériau céramique exempt d'oxydes ;
b) une deuxième zone à base de granulés frittés dudit matériau céramique exempt d'oxydes ;
c) les granulés de la première zone présentent une première granulométrie ;
d) les granulés de la deuxième zone présentent une deuxième granulométrie ;
e) la première granulométrie est supérieure à la deuxième granulométrie ;
f) une zone de transition, disposée entre la première zone et la deuxième zone, à base de granulés frittés dudit matériau céramique exempt d'oxydes ;
g) les granulés de la zone de transition présentent une granulométrie qui est inférieure à la première granulométrie et supérieure à la deuxième granulométrie ;
h) la première zone comporte au moins une matière qui abaisse la température de frittage des granulés de la première zone par rapport auxdits granulés à l'état pur ;
i) la deuxième zone comporte au moins une matière qui augmente la température de frittage des granulés de la deuxième zone par rapport auxdits granulés à l'état pur ;
j) la première zone, la deuxième zone et la zone de transition forment un corps monolithique à cellules ouvertes.

2. Filtre céramique selon la revendication 1 constitué d'un matériau exempt d'oxydes sous forme d'au moins une des matières suivantes :
carbure de silicium ou carbure de bore.

3. Filtre céramique selon la revendication 1, constitué d'une première zone, d'une deuxième zone et d'une zone de transition sous forme d'un carbure de silicium recristallisé.

4. Filtre céramique selon la revendication 1 chez lequel la première zone et la deuxième zone sont chacune produite au moyen d'un procédé de coulage en bande pour matières céramiques.

5. Filtre céramique selon la revendication 1, présentant une première granulométrie comprise entre 8 et 56 µm.

6. Filtre céramique selon la revendication 1, présentant une deuxième granulométrie comprise entre 1 et 30 µm.

7. Filtre céramique selon la revendication 1, dont la première zone présente une porosité comprise entre 30 et 70 %.

8. Filtre céramique selon la revendication 1, dont la deuxième zone présente une porosité comprise entre 30 et 70 %.

9. Filtre céramique selon la revendication 1, dont la zone de transition a une épaisseur représentant trois à vingt fois la première granulométrie.

10. Filtre céramique selon la revendication 1, comportant une matière qui abaisse la température de frittage des granulés de la première zone par rapport auxdits granulés à l'état pur et qui se présente sous forme d'au moins une des matières suivantes :
aluminium, composés d'aluminium, bore, composés de bore, composés d'aluminium-bore ou leurs mélanges.

11. Filtre céramique selon la revendication 1, comportant une matière qui augmente la température de frittage des granulés de la deuxième zone par rapport auxdits granulés à l'état pur et qui se présente sous forme d'au moins une des matières suivantes :
zirconium, composés de zirconium ou leurs mélanges.

12. Procédé de fabrication d'un filtre céramique, comprenant :
a) mise en place d'un premier versement à base de granulés d'un matériau céramique exempt d'oxydes ;
b) mise en place d'un deuxième versement à base de granulés dudit matériau céramique exempt d'oxydes ;
c) les granulés du premier versement présentent une première granulométrie ;
d) les granulés du deuxième versement présentent une deuxième granulométrie ;
e) la première granulométrie est supérieure à la deuxième granulométrie ;
f) mise en place d'un troisième versement à base de granulés dudit matériau céramique exempt d'oxydes ;
g) les granulés du troisième versement présentent une granulométrie qui est inférieure à la première granulométrie et supérieure à la deuxième granulométrie ;
h) le premier versement comporte au moins une matière qui abaisse la température de frittage des granulés du premier versement par rapport auxdits granulés à l'état pur ;
i) le deuxième versement comporte au moins une matière qui augmente la température de frittage des granulés du deuxième versement par rapport auxdits granulés à l'état pur ;
j) le premier, deuxième et troisième versement sont disposés en couches, le troisième versement étant disposé entre le premier et le deuxième versement ;
k) les versements disposés en couches sont soumis à un frittage pour ainsi obtenir un corps monolithique à cellules ouvertes.
